# EUROPÄISCHE PATENTSCHRIFT

(11) **EP 2 216 452 B1**
(45) Veröffentlichungstag und Bekanntmachung des Hinweises auf die Patenterteilung: **20.04.2016**
(21) Anmeldenummer: 10152235.7
(22) Anmeldetag: 01.02.2010
(51) Int. Cl.: E04B 1/26, F16B 43/02

(54) **Beschlagelement**
Fitting element
Elément de ferrure

(30) Priorität: 06.02.2009 DE 102009008765
(43) Veröffentlichungstag der Anmeldung: 11.08.2010
(73) Patentinhaber: SWG Schraubenwerk Gaisbach GmbH, 74638 Waldenburg (DE)
(72) Erfinder: Ernst, Henning, 76761, Rülzheim (DE)
(74) Vertreter: Patentanwälte Ruff, Wilhelm, Beier, Dauster & Partner mbB

(56) Entgegenhaltungen:
- WO-A2-2007/025835
- DE-A1- 10 023 627
- DE-C1- 19 607 846

## Beschreibung

Die Erfindung betrifft ein Beschlagelement, das sich mit Schrauben befestigen lässt.

Vollgewindeschrauben sind sowohl zur Verbindung von Stahl an Holz als auch zur Verbindung von Holz untereinander bekannt. Bei der Verbindung von Holz zu Holz können nicht nur Zugkräfte, sondern auch Druckkräfte übertragen werden, wobei diese Übertragung nicht über den Schraubenkopf, sondern über den Gewindegang erfolgt.

Bei der Verbindung von Stahl auf Holz kommen zurzeit nur Zugschrauben zum Einsatz. Zwischen dem Holz und der Schraube werden die Lasten über das Gewinde übertragen. Die Einleitung der Lasten aus der Schraube in die Stahlteile erfolgt ausschließlich über die Unterseite des Schraubenkopfs und den Stahlteil. Eine Druckkraft in Richtung der Schraubenachse kann der Schraubenkopf nicht in das Stahlteil übertragen.

**Es ist bereits eine Einrichtung zum Verbinden von Teilen einer Paneelstruktur bekannt, die zwei Beschlagelemente aufweist, die jeweils an ein Teil der Paneelstruktur angeschraubt werden. Die beiden Beschlagelemente werden durch eine Schraube miteinander verbunden (**WO 2007/025835 A2**).**

Der Erfindung liegt die Aufgabe zu Grunde, eine Möglichkeit zu schaffen, axiale Druckkräfte von Schrauben in mit den Schrauben an Holzkonstruktionen zu befestigenden Metallteile zu übertragen.

Zur Lösung dieser Aufgabe schlägt die Erfindung ein Beschlagelement mit den im Anspruch 1 genannten Merkmalen und eine Befestigungsanordnung unter Verwendung eines solchen Beschlagelements vor. Weiterbildungen der Erfindung sind Gegenstand von Unteransprüchen.

Dieses Beschlagelement enthält also ein Querelement, das quer zu der Längsrichtung der Schraube verläuft. Dieses Querelement wird mithilfe der Schraube an dem Holzteil angeschraubt. Von dem Querelement können dann Kräfte abgenommen werden. Beispielsweise können die beiden Enden des Querelements mit einem Stahlteil verbunden sein.

Eine Möglichkeit der Anbindung des Querelements besteht darin, dass es in eine Öffnung eines Metallträgers eingesteckt und auf beiden Seiten dieses Metallträgers mit Schrauben mit dem Holzbauteil verschraubt wird.

Eine andere Möglichkeit besteht darin, dass zwei Metallträger verwendet werden und das Querelement beidseits in jeweils eine Öffnung jedes Metallteils eingesteckt wird.

In Weiterbildung der Erfindung **ist** vorgesehen, dass in das Querelement ein Blockierelement einsetzbar ist, das an der Oberseite des Schraubenkopfs anliegt und diesen in Längsrichtung der Schraube gegenüber dem Querelement blockiert. Dieses Blockierelement legt dann den Schraubenkopf innerhalb des Beschlaglements so fest, dass der Schraubenkopf in beide Richtungen gegenüber dem Querelement nicht mehr in seiner Lage verändert werden kann. Dadurch wird es möglich, Druckkräfte und Zugkräfte über den Schraubenkopf in das Querelement zu übertragen, das dann mit weiteren Mitteln an dem Stahlteil befestigt sein kann.

Die Weiterleitung der Lasten aus dem Beschlagelement an angrenzende Stahlbauteile entspricht einer Standardstahlverbindung, die nach DIN 18800 dimensioniert werden kann.

Insbesondere kann in Weiterbildung vorgesehen sein, dass das Querelement einen in seiner eigenen Längsrichtung verlaufenden Durchgang aufweist, in den das Blockierelement eingeschoben werden kann.

In Weiterbildung der Erfindung kann vorgesehen sein, dass das Querelement als Bolzenelement ausgebildet ist, also als ein massives Teil. Die Aufnahme für die Schraube und ihren Schraubenkopf wird dabei von einer quer zur Längsachse des Bolzens verlaufenden Stufenbohrung gebildet, deren Achse vorzugsweise natürlich durch die Längsachse des Bolzens verläuft. Die Abstufung ist erforderlich, damit der Schraubenkopf vollständig innerhalb des Umfangs des Querelements angeordnet ist.

In Weiterbildung der Erfindung **ist** vorgesehen, dass das Querelement mindestens zwei Aufnahmen für jeweils eine Schraube aufweist, die in Längsrichtung des Querelements einen Abstand aufweisen. Dadurch ist es möglich, das Querelement mithilfe mehrerer Schrauben an einem Holzbauteil zu befestigen.

Es wird von der Erfindung vorgeschlagen, dass **die** Aufnahmen für **die** Schrauben eine gegenüber der Längsachse des Querelements unterschiedliche Winkelposition aufweisen, beispielsweise um 90° versetzt angeordnet sind.

Da für die Verbindung von Holzbauteilen mit Stahlbauteilen üblicherweise Schrauben mit Senkköpfen verwendet werden, kann in Weiterbildung der Erfindung vorgesehen sein, dass die für die Unterseite des Schraubenkopfs bestimmte Anlagefläche des Querelements einer Ansenkung aufweist, die Erfahrung üblicher Schraubenköpfe entspricht. Selbstverständlich ist dann, wenn die Verwendung von Schrauben mit einer ebenen Unterseite ihres Schraubenkopfs gewünscht wird, auch eine derartige Form der Anlagefläche möglich.

Für den in Längsrichtung des Querelements verlaufenden Durchgang ist jede Form möglich, sofern sie im Zusammenwirken mit dem Blockierelement dieses in Querrichtung festlegt. Sinnvoll ist es, wenn nach einem weiteren Merkmal der Erfindung der Durchgang als Bohrung ausgebildet ist und das Blockierelement eine kreiszylindrische Außenform aufweist. Gegebenenfalls ist auch denkbar, dass das Blockierelement abschnittsweise eine andere Form aufweist.

Die Außenform des Querelements kann beliebig sein. Bei der Ausbildung des Querelements als Bolzenelement kann eine Kreiszylinderform des Bolzenelements bevorzugt werden.

Es ist in weiterer Ausgestaltung der Erfindung auch möglich, dass das Querelement nicht als Bolzenelement, also als massiver Teil ausgebildet ist, sondern als Profilelement, wobei ein in seinem Umfang geschlossenes Profil infrage kommt. Auch hier kann die Profilform beliebig gewählt sein.

Bei der Ausgestaltung des Querelements als Profilelement kann die Aufnahme für die Schraube beispielsweise als Öffnung in der Wand des Profilelements ausgebildet sein. Um eine Möglichkeit zu haben, die Schraube auch verdrehen zu können, kann das Profilelement eine den Drehangriff auf den Schraubenkopf ermöglichende weitere Ausnehmung aufweisen.

Insbesondere kann hier vorgesehen sein, dass die Öffnung für den Schraubenschaft, an deren einer Seite die Anlagefläche für den Schraubenkopf ausgebildet ist, von einer seitlich offenen Kerbe gebildet ist.

Erfindungsgemäß kann vorgesehen sein, dass die Öffnung für den Schraubenschaft als ein Loch mit geschlossenem Umfang ausgebildet ist.

In Weiterbildung kann vorgesehen sein, dass die Ausnehmung zur Ermöglichung des Drehantriebs eine Größe aufweist, die das Durchstecken der Schraube einschließlich ihres Schraubenkopfs ermöglicht.

Es wurde bereits erwähnt, dass die Erfindung auch eine Befestigungsanordnung zur Befestigung einer Holzkonstruktion an einer Metallkonstruktion vorschlägt. Diese Anordnung enthält ein Beschlagelement, wie es hierin beschrieben ist, und mindestens ein Metallprofil, wobei das Querelement des Beschlagelements in eine Öffnung des mindestens einen Metallprofils eingesetzt wird.

In Weiterbildung kann die Befestigungsanordnung mindestens zwei Metallprofil aufweisen, wobei das Querelement des Beschlagelements beidseits in die eine Öffnung der beiden Metallprofile eingesetzt ist.

Diese insoweit beschriebene Befestigungsanordnung dient zur Aufnahme und Übertragung von mithilfe von Schrauben zu übertragenden Zugkräften.

Die Befestigungsanordnung kann aber auch zur Aufnahme und Übertragung von mithilfe von Schrauben zu übertragenden Druckkräften verwendet werden.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: stark vereinfacht die Seitenansicht eines Beschlagteils nach der Erfindung;
- Figur 2: die Stirnansicht der Anordnung der Figur 1;
- Figur 3: einen ersten Querschnitt durch das Beschlagteil;
- Figur 4: einen zweiten Querschnitt;
- Figur 5: schematisch die gegenseitige Anordnung von Schraubenköpfen und Blockierelement;
- Figur 6: ein Beispiel für die Verbindung eines Holzbalkens mit einem Stahlteil unter Verwendung mehrerer Beschlagteile nach der Erfindung;
- Figur 7: eine Stirnansicht der Anordnung der Figur 6 von links in Figur 6;
- Figur 8: vereinfacht **ein nicht zur Erfindung gehörendes Beschlagteil;**
- Figur 9: eine der Figur 8 entsprechende Darstellung eines weiteren **Beschlagteils;**
- Figur 10: nochmals in größerer Einzelheit die Verwendung eines Beschlagelements.

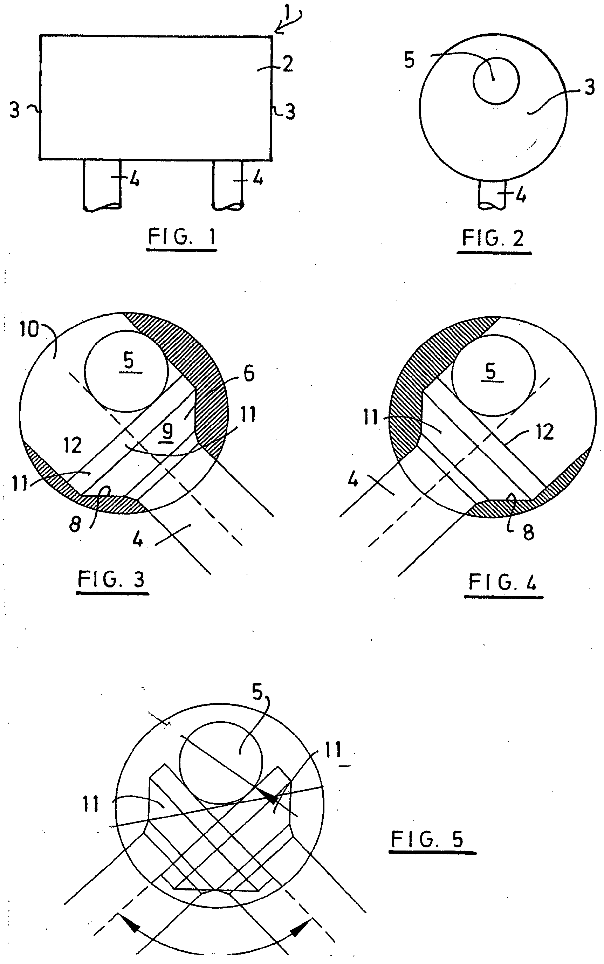

Figur 1 zeigt die Seitenansicht eines Beschlagteils nach der Erfindung. Das Beschlagteil enthält ein Querelement 1 in Form eines zylindrischen Bolzens 2 mit zwei ebenen Stirnseiten 3. Radial gegenüber einer Längsachse des Bolzens 2 erstrecken sich aus dem Bolzenelement 2 zwei Schraubenschäfte 4, die nur angedeutet sind. Im dargestellten Beispiel könnten beide Schrauben parallel zueinander verlaufen. Dieses Beschlagteil wird beispielsweise an einem Holzbalken angeschraubt, wobei die beiden Stirnendenden des Bolzenelements 2 zu einer Verbindung mit einem Stahl Bauteil dienen.

Eine der beiden Stirnseiten 3 ist in der Ansicht der Figur 2 zu sehen, die eine Stirnansicht des Beschlagteils zeigt. Wie man der Figur 2 auch entnehmen kann, ist in dem Bolzenelement 2 ein in Längsrichtung des Bolzenelements 2 verlaufender Durchgang vorhanden, im dargestellten Beispiel als zylindrische Bohrung ausgebildet, in der ein Blockierelement 5 eingesetzt ist. Das Blockierelement 5 verläuft beispielsweise mit beiden Stirnseiten 3 bündig, so dass es in der Seitenansicht der Figur 1 nicht zu sehen ist.

Die Figuren 3 und 4 zeigen nun Schnitte durch ein Beschlagelement in verschiedenen Ebenen, wobei in diesem Fall angenommen ist, dass die beiden aus dem Beschlagteil herausragenden Schraubenschäfte 4 nicht parallel zueinander verlaufen, sondern unter einem Winkel von 90°. Für jede Schraube ist in dem Beschlagteil einer Aufnahme 6 vorhanden, die als Stufenbohrung ausgebildet ist. Die Aufnahme 6 weist eine an der Außenseite des Bolzenelements 2 ausmündende Durchgangsbohrung 7 auf, die von einer kegelförmigen Anlagefläche 8 umgeben ist. Diese kegelförmige Anlagefläche 8 ist zur Anlage der Unterseite 9 des Schraubenkopfs einer Senkkopfschraube bestimmt und an ihre Kegelform angepasst. Auf der gegenüberliegenden Seite tritt die Stufenbohrung als Öffnung 10 aus der Mantelfläche des Bolzenelements 2 aus. In diesem Bereich weist sie einen Durchmesser auf, der dem Außendurchmesser des Schraubenkopfs 11 entspricht. Dadurch ist es möglich, die Schraube durch die Stufenbohrung hindurch zu stecken, und die Schraube an einem Holzbalken anzuschrauben, bis die Unterseite 9 des Schraubenkopfs 11 an der Anlagefläche 8 rings um die Durchgangsbohrung 7 anliegt.

In dieser Position des Schraubenkopfs 11 wird dieser nun durch das Blockierelement 5 in Form eines kreisrunden Zapfens blockiert. Das Blockierelement 5 ist vor und hinter der die Aufnahme für den Schraubenkopf 11 bildenden Stufenbohrung in dem erwähnten seinem Durchmesser entsprechenden Durchgang in dem Bolzenelement 2 festgelegt.

Die Figur 4 zeigt bei unveränderter Anordnung des Bolzenelements 2 einen Querschnitt an einer anderen Position. Die Stufenbohrung ist genauso ausgebildet die bei dem Schnitt der Figur 3. Auch hier wird die Schraube durch Angriff des Blockierelements 5 an der Oberseite 12 des Schraubenkopfs 11 festgelegt.

Die Figur 5 zeigt eine Zusammenschau der beiden Schlitze in Figur 3 und 4. Es ist hier zu sehen, dass es tatsächlich möglich ist, die Stufenbohrungen und den Durchgang für das Blockierelement 5 so zu legen, dass ein Blockierelement 5 die beiden Schrauben festlegen kann. Im dargestellten Beispiel schließen die Schraubenlängsachsen einen Winkel von 90° ein. Es sind auch andere Winkel möglich.

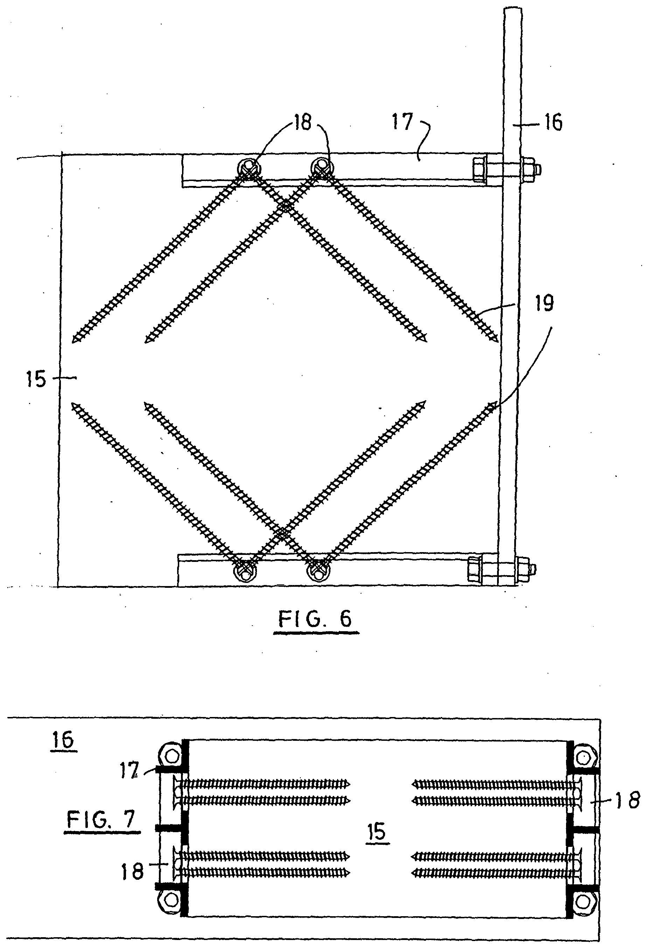

Die Figuren 6 und 7 zeigen nun, wie ein solches Beschlagelement verwendet werden kann. Ein Holzbalken 15 soll mit einem Stahlträger 16 verbunden werden. An zwei einander gegenüberliegenden Seiten des Holzbalkens 15 sind Winkelprofile 17 angeordnet, zwischen denen sich Beschlagelemente 18 nach der Erfindung erstrecken. Die Beschlagelemente 18 sind mit Schrauben 19 an dem Balken 15 angeschraubt. Auf diese Weise können von den Schrauben 19 auf die Beschlagelemente 18 ausgeübte Druckkräfte auch auf den Stahlträger 16 übertragen werden.

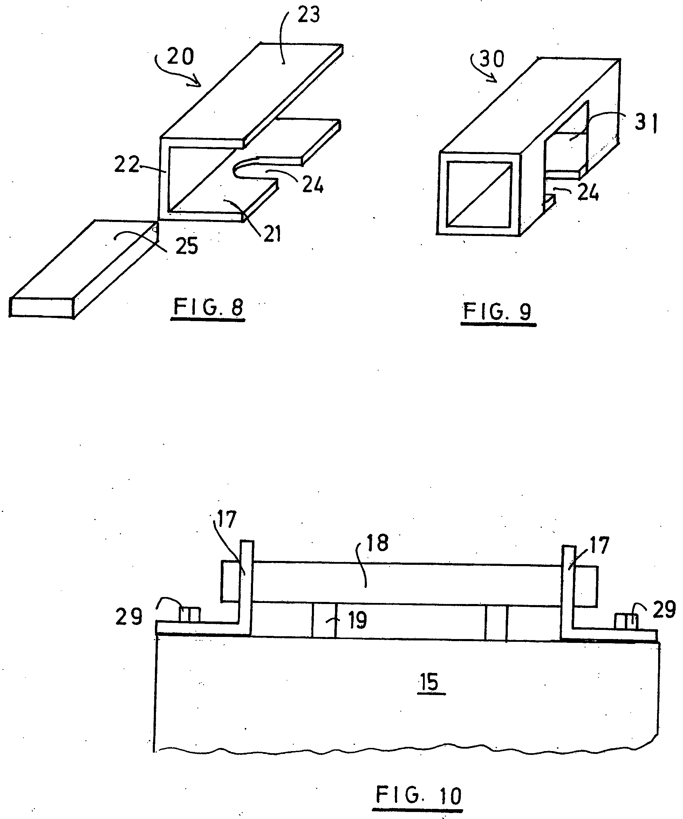

Die Figuren 8 und 9 zeigen abgeänderte Beschlagelemente. Während bei den bisher behandelten Beschlagelementen nach der Erfindung das Querelement als kreiszylindrisches massives Bolzenelement 2 ausgebildet ist, zeigt die Figur 8 als ein vereinfachtes Beispiel ein Beschlagelement, bei dem das Querelement, hier nur für eine Schraube ausgebildet, als Profilelement ausgebildet ist. Das Profilelement ist ein quadratisches Element mit einer offenen Seite. Es enthält also eine dem Holzbalken zugewandte ebene Unterseite 21, einer Rückwand 22 und einer Oberseite 23. In der Unterseite 21 ist eine seitlich offene Kerbe 24 ausgebildet, die dem Durchmesser des Schraubenschafts einer Schraube unmittelbar unterhalb des Schraubenkopfs entspricht. Der Bereich der Innenseite der Unterseite 21 unmittelbar außerhalb der Kerbe 24 bildet eine Anlagefläche für eine ebene Unterseite eines Schraubenkopfs. Die Schraube kann bei dieser Ausführungsform zunächst fast vollständig in dem Holzbalken eingeschraubt werden, und anschließend kann das Profilelement 20 seitlich unter den Schraubenkopf geschoben werden. Falls es sich bei dem Schraubenkopf um eine Sechskantschraube handelt, kann mithilfe eines Schraubenschlüssels die Schraube dann endgültig fest gedreht werden. Anschließend wird ein Blockierelement 25, in diesem Fall ein flacher Quader, zwischen die Innenseite der Oberseite 23 des Profilelements 20 und die Oberseite des Schraubenkopfs eingeschoben. Ein seitliches Verrücken des Blockierelements 25 kann auf andere Weise verhindert werden.

Die Figur 9 zeigt eine weitere **Anordnung,** bei der das Querelement als Vierkantprofilelement 30 mit geschlossenem Umfang ausgebildet ist. An der gleichen Stelle wie in Figur 8 ist in der Außenwand eine Aussparung 31 angebracht, und die Unterseite enthält eine gleiche Kerbe 24 wie bei der Ausführungsform nach Figur 8. Das Profilelement 30 der Figur 9 kann in der gleichen Weise verwendet werden wie das Profilelement 20 der Figur 8. Aufgrund der geschlossenen Form hat das Profilelement 30 der Figur 9 eine größere Stabilität.

In ähnlicher Weise kann ein Querelement des Beschlagelements nach der Erfindung auch als kreiszylindrisches Rohr ausgebildet sein.

Auch bei der **Anordnung** nach Figur 8 und Figur 9 kann ein Zugriff auf den Schraubenkopf nicht nur von der Seite, sondern auch von oben durch eine in der Oberseite 23 angeordnete Öffnung geschehen.

In Figur 10 ist nochmals eine Anordnung ähnlich wie in Figur 6 und 7 dargestellt. Auf den Balken 15 sind zwei senkrecht zur Zeichnungsebene der Figur 10 verlaufende Winkelprofile 17 angebracht, die mit Schrauben 29 an dem Balken 15 festgeschraubt sind. Die Winkelprofile weisen zwei rechtwinklig zueinander verlaufende Schenkel auf, von denen der eine Schenkel auf die Oberseite des Balkens 15 aufgeschraubt ist.

Die jeweils anderen Schenkel der Winkelprofile weisen ein Loch auf, dessen Form der Querschnittsform des Querelements 18 entspricht. Das Querelement 18 ist an seinen beiden Enden in jeweils ein derartiges Loch der Winkelprofile eingesetzt, und in der dadurch gebildeten Position mithilfe von zwei Schrauben 19 an dem Holzbalken 15 festgeschraubt. Die Winkelprofile 17 können dann an ihren Enden mit einem weiteren Stahlträger, beispielsweise dem Stahlträger 16 der Figur 6, verbunden, beispielsweise verschraubt werden. Auf diese Weise erfolgt eine Verbindung zwischen dem Holzbalken 15 und einem Stahl Element. Die Schrauben 19 werden ausschließlich auf Zug beansprucht, und ihre Festlegung in dem Querelement 18 kann sowohl auf Zug oder, sofern ein Blockierelement eingeschoben ist, auch auf Druck beansprucht werden.

## Patentansprüche

1. Beschlagelement, enthaltend
1.1 ein zylindrisches, insbesondere kreiszylindrisches, Querelement, das
1.2 mindestens eine Aufnahme mit einer Anlagefläche (8) für die Unterseite (9) des Schraubenkopfs (11) einer quer zur Längsachse des Querelements anzuordnenden Schraube und
1.3 eine Zugriffsmöglichkeit zum Drehangriff an dem Schraubenkopf (11) der in der Aufnahme einzusetzenden Schraube aufweist, sowie
1.4 ein Blockierelement (5, 25), das in das Querelement einsetzbar ist und in eingesetztem Zustand an der Oberseite (12) des mit seiner Unterseite (9) an der Anlagefläche (8) der Aufnahme anliegenden Schraubenkopfs (11) diesen in Längsrichtung der Schraube blockierend anliegen kann,
**gekennzeichnet durch**
1.5 mindestens zwei in Längsrichtung des Querelements beabstandeten Aufnahmen für jeweils eine Schraube, die
1.6 in unterschiedlicher Winkelposition gegenüber dem Querelement angeordnet sind.

2. Beschlagelement nach Anspruch 1, wobei das Querelement einen in seiner Längsrichtung verlaufenden Durchgang zum Einschieben des Blockierelements (5, 25) aufweist.

3. Beschlagelement nach Anspruch 1 oder 2, bei dem die Aufnahme derart ausgebildet ist, dass der auf der Anlagefläche (8) aufliegende Schraubenkopfs (11) vollständig innerhalb des Querelements angeordnet ist.

4. Beschlagelement nach einem der vorhergehenden Ansprüche, bei dem das zylindrische Querelement als Bolzenelement (2) ausgebildet ist und die Aufnahme für die Schraube von einer abgestuften Querbohrung durch das Bolzenelement (2) gebildet ist.

5. Beschlagelement nach einem der vorhergehenden Ansprüche, bei dem die Anlagefläche (8) für die Unterseite (9) des Schraubenkopfs (11) eine einem Senkkopf entsprechende Ansenkung aufweist.

6. Beschlagelement nach einem der Ansprüche 2 bis 5, bei dem der in Längsrichtung des Querelements verlaufende Durchgang als Bohrung und das Blockierelement (5) als in seinem Durchmesser der Bohrung angepasster kreiszylindrischer Bolzen ausgebildet ist.

7. Beschlagelement nach einem der Ansprüche 1 bis 3, 5 oder 6, bei dem das Querelement als Profilelement (20, 30) mit einer in seiner Wand (21) mindestens teilweise ausgebildeten Öffnung, deren Umgebung die Anlagefläche für die Unterseite des Schraubenkopfs (11) bildet, ausgebildet ist, wobei insbesondere das Profilelement (20, 30) eine auf die Oberseite des Schraubenkopfs gerichtete Gegenanlagefläche aufweist und das Blockierelement (25) den Zwischenraum zwischen der Gegenanlagefläche und dem Schraubenkopf ausfüllt.

8. Beschlagelement nach Anspruch 7, mit einer seitlich und/oder in axialer Verlängerung der Schraubenlängsachse angeordneten Ausnehmung (31) zum Drehantrieb an dem Schraubenkopf.

9. Beschlagelement nach einem der vorhergehenden Ansprüche, bei dem das Profilelement als geschlossenes Profil (30) ausgebildet ist.

10. Beschlagelement nach einem der vorhergehenden Ansprüche, bei dem die Öffnung für den Schraubenschaft als eine seitlich offene Kerbe (24) oder als ein Loch (7) mit geschlossenem Umfang ausgebildet ist.

11. Beschlagelement nach einem der vorhergehenden Ansprüche, bei dem die Ausnehmung zur Ermöglichung des Drehantriebs eine das Durchstecken der Schraube (4, 19) ermöglichende Größe aufweist.

12. Befestigungsanordnung zur Befestigung einer Holzkonstruktion (15) an einer Metallkonstruktion, mit mindestens einem Beschlagelement nach einem der vorhergehenden Ansprüche und mindestens einem Metallprofil (17), wobei das Querelement (18) des Beschlagelements in eine Öffnung des mindestens einen Metallprofils (17) eingesetzt ist, wobei bei mindestens zwei Metallprofilen (17) das Querelement (18) des Beschlagelements beidseits in je eine Öffnung der beiden Metallprofile (17) eingesetzt ist.

13. Befestigungsanordnung nach Anspruch 12, zur Aufnahme und Übertragung von mithilfe von Schrauben (4, 19) zu übertragenden Zugkräften und/oder zur Aufnahme und Übertragung von mithilfe von Schrauben (4, 19) zu übertragenden Druckkräften.

14. Verwendung eines Beschlagelements nach einem der Ansprüche 1 bis 11 zur Aufnahme und Übertragung von mithilfe von Schrauben (4, 19) zu übertragenden Zugkräften und/oder Druckkräften, wobei das Querelement (18) in eine Öffnung mindestens eines Metallprofils (17), insbesondere mit seinen beiden Enden jeweils eine Öffnung eines Metallprofils (17), eingesteckt und mithilfe von Schrauben (4,19) an einer Holzkonstruktion (15) angeschraubt wird.

## Claims

1. Fitting element, comprising
1.1 a cylindrical, in particular circular cylindrical, traverse element including
1.2 at least one seat with an abutment surface (8) for the bottom side (9) of the screw head (11) of a screw to be disposed transverse to the longitudinal axis of the traverse element and
1.3 an access facility for rotary engagement on the screw head (11) of the screw to be inserted into the seat, and
1.4 a blocking element (5, 25) which is insertable into the traverse element and in the inserted condition is capable of abutting and blocking the screw head in the longitudinal direction of the screw on the top side (12) of the screw head (11) resting with its bottom side (9) on the abutment surface (8) of the seat,
**characterized by**
1.5 at least two seats for respectively one screw spaced in the longitudinal direction of the traverse element,
1.6 said seats disposed in different angular positions in relation to the traverse element.

2. Fitting element according to claim 1, wherein the traverse element includes a passage extending in the longitudinal direction thereof for inserting the blocking element (5, 25).

3. Fitting element according to claim 1 or 2, wherein the seat is configured such that the screw head (11) resting on the abutment surface (8) is located completely within the traverse element.

4. Fitting element according to any of the preceding claims, wherein the cylindrical traverse element is a bolt element (2) and the seat for the screw is a stepped cross bore through the bolt element (2).

5. Fitting element according to any of the preceding claims, wherein the abutment surface (8) for the bottom side (9) of the screw head (11) has a countersink corresponding to a countersunk head.

6. Fitting element according to any of claims 2 to 5, wherein the passage extending in the longitudinal direction of the traverse element is a bore and the blocking element (5) is a circular cylindrical bolt having a diameter matched to the bore.

7. Fitting element according to any of claims1 to 3, 5 or 6, wherein the traverse element is a profile element (20, 30) having an at least partial opening in a wall (21) thereof, the vicinity of the opening forming the abutment surface for the bottom side of the screw head (11), wherein in particular the profile element (20, 30) has a counter-abutment surface directed towards the top side of the screw head and the blocking element (25) occupies the intermediate spacing between the counter-abutment surface and the screw head.

8. Fitting element according to claim 7, having a seat (31) disposed laterally and/or in axial prolongation of the longitudinal axis of the screw for turning drive on the screw head.

9. Fitting element according to any of the preceding claims, wherein the profile element is a closed profile (30).

10. Fitting element according to any of the preceding claims, wherein the opening for the screw shaft is a laterally open notch (24) or a hole (7) with closed circumference.

11. Fitting element according to any of the preceding claims, wherein the seat has a size allowing insertion of the screw (4, 19) therethrough to provide turning drive.

12. Fastening device for fastening a wooden structure (15) to a metal structure, comprising at least one fitting element according to any of the preceding claims and at least one metal profile (17), wherein the traverse element (18) of the fitting element is inserted into an opening of the at least one metal profile (17), wherein with at least two metal profiles (17) the traverse element (18) of the fitting element is inserted in a respective opening of the two metal profiles (17) on both sides.

13. Fastening device according to claim 12, for absorption and transmission of tensile forces to be transferred using screws (4, 19) and/or for absorption and transmission of compressive forces to be transferred using screws (4, 19).

14. Use of a fitting element according to any of claims 1 to 11 for absorption and transmission of tensile forces and/or compressive forces to be transferred using screws (4, 19), wherein the traverse element (18) is inserted into an opening of at least one metal profile (17), in particular with the two ends thereof into a respective opening of a metal profile (17), and screwed to a wooden structure (15) by means of screws (4, 19).

## Revendications

1. Élément de ferrure, comprenant :
1.1 un élément transversal cylindrique, en particulier cylindrique circulaire,
1.2 qui présente au moins un logement avec une surface d'appui (8) pour le côté inférieur (9) de la tête de vis (11) d'une vis devant être disposée transversalement à l'axe longitudinal de l'élément transversal et
1.3 une possibilité d'accès pour l'engagement en rotation au niveau de la tête de vis (11) de la vis devant être insérée dans le logement,
1.4 ainsi qu'un élément de blocage (5, 25) qui peut être inséré dans l'élément transversal et qui, dans l'état inséré, peut s'appliquer contre le côté supérieur (12) de la tête de vis (11) s'appliquant avec son côté inférieur (9) contre la surface d'appui (8) du logement en bloquant la tête de vis dernière dans la direction longitudinale de la vis,
**caractérisé par**
1.5 au moins deux logements espacés dans la direction longitudinale de l'élément transversal pour une vis respective,
1.6 qui sont disposés dans différentes positions angulaires par rapport à l'élément transversal.

2. Élément de ferrure selon la revendication 1, dans lequel l'élément transversal présente un passage s'étendant dans sa direction longitudinale pour l'insertion de l'élément de blocage (5, 25).

3. Élément de ferrure selon la revendication 1 ou 2, dans lequel le logement est réalisé de telle sorte que la tête de vis (11) reposant sur la surface d'appui (8) soit disposée complètement à l'intérieur de l'élément transversal.

4. Élément de ferrure selon l'une quelconque des revendications précédentes, dans lequel l'élément transversal cylindrique est réalisé sous forme d'élément de boulon (2) et le logement pour la vis est formé par un alésage transversal étagé à travers l'élément de boulon (2).

5. Élément de ferrure selon l'une quelconque des revendications précédentes, dans lequel la surface d'appui (8) pour le côté inférieur (9) de la tête de vis (11) présente un lamage correspondant à une tête fraisée.

6. Élément de ferrure selon l'une quelconque des revendications 2 à 5, dans lequel le passage s'étendant dans la direction longitudinale de l'élément transversal est réalisé sous forme d'alésage et l'élément de blocage (5) est réalisé sous la forme d'un boulon cylindrique circulaire dont le diamètre est adapté à l'alésage.

7. Élément de ferrure selon l'une quelconque des revendications 1 à 3, 5 ou 6, dans lequel l'élément transversal est réalisé sous la forme d'un élément profilé (20, 30) avec une ouverture réalisée au moins en partie dans sa paroi (21), dont la partie périphérique forme la surface d'appui pour le côté inférieur de la tête de vis (11), l'élément profilé (20, 30) présentant notamment une surface d'appui conjuguée orientée vers le côté supérieur de la tête de vis et l'élément de blocage (25) remplissant l'espace intermédiaire entre la surface d'appui conjuguée et la tête de vis.

8. Élément de ferrure selon la revendication 7, comprenant un évidement (31) disposé latéralement et/ou dans le prolongement axial de l'axe longitudinal de la vis en vue de l'entraînement en rotation au niveau de la tête de vis.

9. Élément de ferrure selon l'une quelconque des revendications précédentes, dans lequel l'élément profilé est réalisé sous forme de profilé fermé (30).

10. Élément de ferrure selon l'une quelconque des revendications précédentes, dans lequel l'ouverture pour la tige de vis est réalisée sous la forme d'une entaille ouverte latéralement (24) ou sous la forme d'un trou (7) de pourtour fermé.

11. Élément de ferrure selon l'une quelconque des revendications précédentes, dans lequel l'évidement présente, pour faciliter l'entraînement en rotation, une taille permettant l'insertion de la vis (4, 19).

12. Agencement de fixation pour la fixation d'une construction en bois (15) sur une construction en métal, comprenant au moins un élément de ferrure selon l'une quelconque des revendications précédentes et au moins un profilé métallique (17), l'élément transversal (18) de l'élément de ferrure étant inséré dans une ouverture de l'au moins un profilé métallique (17), l'élément transversal (18) de l'élément de ferrure, lorsqu'au moins deux profilés métalliques (17) sont présents, étant inséré des deux côtés dans une ouverture respective des deux profilés métalliques (17).

13. Agencement de fixation selon la revendication 12, pour recevoir et transférer des forces de traction à transmettre à l'aide de vis (4, 19) et/ou pour recevoir et transférer des forces de pression à transférer à l'aide de vis (4, 19).

14. Utilisation d'un élément de ferrure selon l'une quelconque des revendications 1 à 11 pour recevoir et transférer des forces de traction et/ou des forces de pression à transférer à l'aide de vis (4, 19), l'élément transversal (18) étant enfiché dans une ouverture d'au moins un profilé métallique (17), en particulier avec ses deux extrémités dans une ouverture respective d'un profilé métallique (17), et étant vissé à l'aide de vis (4, 19) sur une construction en bois (15).
